# EUROPÄISCHE PATENTSCHRIFT

(11) **EP 0 976 193 B1**
(45) Veröffentlichungstag und Bekanntmachung des Hinweises auf die Patenterteilung: **21.11.2001**
(21) Anmeldenummer: 98907863.9
(22) Anmeldetag: 26.01.1998
(51) Int. Cl.: H02M 3/335

(54) **PULSWEITENMODULATOR**
PULSE WIDTH MODULATOR
MODULATEUR DE LARGEUR D'IMPULSION

(30) Priorität: 26.02.1997 DE 19707707
(43) Veröffentlichungstag der Anmeldung: 02.02.2000
(73) Patentinhaber: Infineon Technologies AG, 81669 München (DE)
(72) Erfinder: FELDTKELLER, Martin, D-81543 München (DE)
(74) Vertreter: Zedlitz, Peter, Dipl.-Inf.
(86) Internationale Anmeldenummer: DE9800231
(87) Internationale Veröffentlichungsnummer: WO9838726

(56) Entgegenhaltungen:
- EP-A- 0 576 702
- EP-A- 0 584 623
- EP-A- 0 588 168
- DE-A- 19 524 963
- US-A- 4 975 820
- US-A- 5 335 162
- US-A- 5 390 101

## Beschreibung

Die Erfindung betrifft einen Pulsweitenmodulator zur Ansteuerung eines Halbleiter-Leistungsschalters in einem Schaltnetzteil mit folgenden Merkmalen:
- einer Vergleicherschaltung zur Erzeugung von Ansteuerimpulsen nach Maßgabe eines Oszillatorsignals, wobei die Dauer der einzelnen Ansteuerimpulse von einem ersten Regelsignal und einem zweiten Regelsignal abhängt;
- einer Meßanordnung zur Erzeugung eines vom Laststrom des Leistungsschalters abhängigen Laststromsignals;
- einem Rückkopplungszweig zur Rückkopplung des Laststromsignals an die Vergleicherschaltung.
- der Rückkopplungszweig weist eine Tiefpaßanordnung (TP) auf, deren Eingang das Laststromsignal (LS) zuführbar und an deren Ausgang das zweite Regelsignal (RS2) abgreifbar ist.

Derartige Pulsweitenmodulatoren dienen der Regelung der Ausgangsspannung bzw. der Ausgangsleistung eines Schaltnetzteils.

Ein Pulsweitenmodulator gemäß den obigen Merkmalen ist beispielsweise aus der US 5,390,101 bekannt

Aus der EP 0 584 623 A1 ist weiterhin ein Umrichter zur Erzeugung einer konstanten Ausgangsspannung mit einer Current-Mode-Regelung bekannt, der zur Befreiung von auftretenden Spitzen ein nachgeschaltetes RC-Glied aufweist, wobei die Spitzen jeweils beim Beginn der Einschaltphase eines Leistungsschalters entstehen.

Die von einem Schaltnetzteil aufgenommene bzw. abgegebene Leistung bestimmt sich unter anderem aus der Dauer der periodisch erzeugten Ansteuerimpulse, welche ein Schließen des Halbleiter-Leistungschalters für die Dauer der Ansteuerimpulse und damit das Fließen eines Laststroms bewirken. Die Regelung der Dauer der üblicherweise im Takt des Oszillatorsignals erzeugten Ansteuerimpulse erfolgt in der Schaltanordnung abhängig von einem ersten und zweiten Regelsignal, wobei das erste Regelsignal unter anderem von der Ausgangsspannung bzw. der Ausgangsleistung des Schaltnetzteils abhängt.

Bei den bisher bekannten Pulsweitenmodulatoren zur Ansteuerung eines Halbleiter-Leistungsschalters erfolgt damit ein Schließen des Halbleiter-Leistungsschalters im Takt des Oszillatorsignals, wobei der Halbleiter-Leistungsschalter abhängig vom Verlauf des ersten und zweiten Regelsignals wieder geöffnet wird. Üblicherweise sind die Ansteuerimpulse so gewählt, daß sie bei Überschreiten des ersten Regelsignals durch das zweite Regelsignal enden, wodurch der Halbleiter-Leistungsschalter geöffnet wird.

Bei bisher bekannten derartigen Pulsweitenmodulatoren ist das Laststromsignal direkt oder über einen Verstärker an die Vergleicherschaltung zurückgekoppelt. Aufgrund unweigerlich vorhandener parasitärer Kapazitäten weist der in dem Schaltnetzteil fließende Laststrom nach Einschalten des Halbleiter-Leistungsschalters einen kurzen hohen Einschaltstromimpuls auf, der direkt als zweites Regelsignal in die Vergleicherschaltung zurückgekoppelt ein Abschalten des Halbleiter-Leistungsschalters unmittelbar nach dem Einschalten bewirken würde, wenn der Einschaltimpuls das erste Regelsignal übersteigt. Derartige Pulsweitenmodulatoren zur Ansteuerung eines Halbleiter-Leitungsschalters besitzen daher Anordnungen im Rückkopplungszweig, die das Laststromsignal zu Beginn für eine Dauer ausblenden, die länger ist, als die Dauer der Einschaltimpulse.

Nachteilig bei derartigen Pulsweitenmodulatoren ist, daß keine Ansteuerimpulse erzeugt werden können, deren Dauer geringer ist, als die Dauer über welche das Laststromsignal ausgeblendet wird. Aufgrund der Abhängigkeit der von dem Schaltnezteil abgegebenen Leistung von der Dauer der Ansteuerimpulse ist die abgebbare Leistung eines Schaltnetzteils mit einem derartigen Pulsweitenmodulator damit nach unten begrenzt.

Der Erfindung liegt die Aufgabe zugrunde, einen Pulsweitenmodulator vorzuschlagen, mit dem beliebig kurze, von der Dauer der Einschaltstromimpulse unabhängige Ansteuerimpulse erzeugt werden können und der mit einfachen Mitteln realisierbar ist.

### Ferner soll der Pulsweitenmodulator eine hohe Zuverlässigkeit aufweisen

Dieses Ziel wird für den eingangs genannten Pulsweitenmodulator durch folgendes zusätzliches Merkmal erreicht:
- [Der Rückkopplungszweig weist eine Tiefpaßanordnung, deren Eingang das Laststromsignal zuführbar und an deren Ausgang das zweite Regelsignal abgreifbar ist, auf.]
- Die Tiefpaßanordnung (TP) weist ein Tiefpaßfilter (TF) und eine Schaltanordnung (V_{R}; S1, V_{OFF}; S1, J1; S2, J2) auf, welche einen von dem Laststromsignal (LS) unabhängigen Signalanteil des zweiten Regelsignals (RS2) bewirkt.

Die Tiefpaßanordnung bewirkt, daß ein in der Regel langsam ansteigender und damit niederfrequenter Nutzanteil des Laststromsignals nahezu ungefiltert in das zweite Regelsignal eingeht, während der kurze und damit hochfrequente, aus dem Einschaltimpuls resultierende Störanteil des Laststromsignals durch die Tiefpaßanordnung unterdrückt wird. Ein Ausblenden des Laststromimpulses für eine bestimmte Zeitdauer nach Öffnen des Leistungsschalters ist mit der Tiefpaßanordnung nicht notwendig, so daß insbesondere beliebig kurze Ansteuerimpulse erzeugt werden können.

Weiterbildungen der Erfindung sind Gegenstand der Unteransprüche.

Entsprechend einer Ausführungsform eines Pulsweitenmodulators nach der Erfindung weist. Die Tiefpaßanordnung weist ein Tiefpaßfilter und eine Schaltanordnung auf, wobei letztere einen von dem Laststromsignal unabhängigen Signalanteil des zweiten Regelsignals bewirkt. Die Schaltanordnung ist so gewählt, daß der vom Laststrom unabhängige Signalanteil den aus dem Laststrom resultierenden Signalanteil des zweiten Regelsignals zu einem monoton ansteigenden Signal ergänzt, solange der Halbleiter-Leistungsschalter geschlossen ist. Das Tiefpaßfilter und die Schaltanordnung sind so gewählt, daß auch bei kleinen Lastströmen und damit kleinen Laststromsignalen ein für die Dauer der Ansteuerimpulse streng monoton ansteigendes zweites Regelsignal vorhanden ist, wodurch beliebig kurze Ansteuerimpulse möglich sind.

Weiterbildungen der Erfindung sind Gegenstand der Unteransprüche

Das Tiefpaßfilter ist vorzugsweise ein Filter ersten Grades, wodurch es einfach und platzsparend zu realisieren ist.

Um die Amplituden des ersten und zweiten Regelsignals aufeinander abzustimmen, weist die Tiefpaßanordnung vorzugsweise einen Verstärker auf. Dieser dient weiterhin dazu, beispielsweise das Laststromsignal oder ein von diesem abhängiges Signal vor der Tiefpaßfilterung zu verstärken, um den Einfluß weiterer durch parasitäre Effekte bewirkte Störgrößen auf das zweite Regelsignal zu verringern.

Eine Ausführungsform eines Pulsweitenmodulators nach der Erfindung sieht vor, daß die Schaltanordnung aus einer Rechtecksignalquelle besteht, die vor dem Tiefpaßfilter angeordnet ist. Die von der Rechtecksignalquelle gelieferten Rechteckimpulse sind so gewählt, daß sie gleichzeitig mit dem oder kurz vor dem Einschalten des Halbleiter-Leistungsschalters beginnen und mit dem oder nach dem Abschalten des Halbleiter-Leistungsschalters enden. Die Amplitude der Rechtecksignale ist so gewählt, daß das zweite Regelsignal, welches durch Tiefpaßfilterung aus dem Summensignal des Rechteck- und Laststromsignals hervorgeht, streng monoton ansteigt, solange der Halbleiter-Leistungsschalters geschlossen ist.

Vorzugsweise besteht die Meßanordnung aus einem vom Laststrom durchflossenen Stromfühlwiderstand, der mit einer ersten Klemme an Bezugspotential liegt und an dessen zweiter Klemme das Laststromsignal abgreifbar ist. Das Laststromsignal ergibt sich somit aus dem durch den Laststrom an den Stromfühlwiderstand erzeugten Spannungsabfall.

Weiterhin ist vorgesehen, daß das Tiefpaßfilter aus einem Widerstand und einem Kondensator besteht, wobei eine erste Klemme des Kondensators an Bezugspotential liegt und an dessen zweiter Klemme das zweite Regelsignal abgreifbar ist.

Eine weitere Ausführungsform eines Pulsweitenmodulators nach der Erfindung sieht vor, daß die Schaltanordnung aus einer Konstantspannungsquelle und einem ersten Schalter besteht, der parallel zu dem Kondensator des Tiefpaßfilters angeordnet ist und der abhängig von einem in der Schaltanordnung bereitgestellten Sprungsignal geöffnet oder geschlossen wird. Das Sprungsignal ist so gewählt, daß es den ersten Schalter bei Schließen des Halbleiter-Leistungsschalters öffnet und wieder schließt nachdem der Halbleiter-Leistungsschalter wieder geöffnet ist. Die Spannung der Konstantspannungsquelle ist analog zu den erwähnten Rechtecksignalen so gewählt, daß sich für das zweite Regelsignal ein monoton ansteigendes Signal ergibt, solange der Halbleiter-Leistungsschalter geschlossen ist. Der parallel zu dem Kondensator angeordnete erste Schalter sorgt dafür, daß nach Öffnen des Halbleiter-Leistungsschalters der Kondensator entladen wird und das Tiefpaßfilter in einen definierten Ausgangszustand vor erneutem Schließen des Halbleiter-Leistungsschalters übergeht.

Eine äquivalente Wirkung besitzt eine weitere Ausführungsform der Schaltanordnung, bei welcher eine erste Stromquelle mit einer Klemme mit dem gemeinsamen Anschluß von Kondensator, Widerstand und erstem Schalter verbunden ist, wobei der erste Schalter abhängig von dem Sprungsignal geöffnet oder geschlossen ist. Der durch die erste Stromquelle bewirkte Anteil an dem zweiten Regelsignal ergibt sich aus dem durch die Stromquelle an dem Widerstand bewirkten Spannungsabfall.

Weiterhin ist vorgesehen, daß die Schaltanordnung aus einer zweiten Stromquelle und einem in Reihe dazu geschalteten zweiten Schalter besteht, wobei eine Klemme der Reihenschaltung mit der dem Widerstand und dem Kondensator gemeinsamen Klemme verbunden ist und wobei der zweite Schalter abhängig von dem Sprungsignal geöffnet oder geschlossen wird. Diese Schaltanordnung bewirkt einen rechteckförmigen, mit der Periode des Sprungsignals periodischen Spannungsabfall an dem Widerstand des Tiefpaßfilters. Der so erzeugte Spannungsabfall ist gleichbedeutend mit der Addition eines rechteckförmigen Spannungssignals zu dem Laststromsignal vor Filterung durch das Tiefpaßfilter. Das Sprungsignal ist so zu wählen, daß es den zweiten Schalter mit Einschalten des Halbleiter-Leistungsschalters schließt und den zweiten Schalter nach Öffnen des Halbleiter-Leistungsschalters wieder öffnet.

Die Vergleicherschaltung ist vorzugsweise so gewählt, daß sie einen Komparator, ein RS-Flip-Flop und ein UND-Glied aufweist, wobei der Komparator eingangsseitig mit dem ersten und zweiten Regelsignal, das RS-Flip-Flop eingangsseitig mit dem Ausgang des Komparators und dem Oszillatorsignal und das UND-Glied eingangsseitig mit einem Ausgangssignal des RS-Flip-Flops und dem Oszillatorsignal verbunden ist. Die Ansteuerimpulse liegen am Ausgang des UND-Glieds an.

Der erfindungsgemäße Pulsweitenmodulator ist sowohl für primärgetaktete als auch für sekundärgetaktete Schaltnetzteile geeignet.

Der erfindungsgemäße Pulsweitenmodulator wird nachfolgend anhand von Figuren näher erläutert. Es zeigen:
- Fig. 1:: : ein erstes Ausführungsbeispiel eines erfindungsgemäßen Pulsweitenmodulators,
- Fig. 2:: ein zweites Ausführungsbeispiel des Pulsweitenmodulators,
- Fig. 3:: ein drittes Ausführungsbeispiel des Pulsweitenmodulators,
- Fig. 4:: ein viertes Ausführungsbeispiel des Pulsweitenmodulators,
- Fig. 5:: ein fünftes Ausführungsbeispiel des Pulsweitenmodulators,
- Fig. 6:: den zeitlichen Verlauf ausgewählter Signale zur Erläuterung der Funktionsweise des Pulsweitenmodulators.

In den Figuren bezeichnen, sofern nicht anders angegeben, gleiche Bezugszeichen gleiche Bauteile mit gleicher Bedeutung.

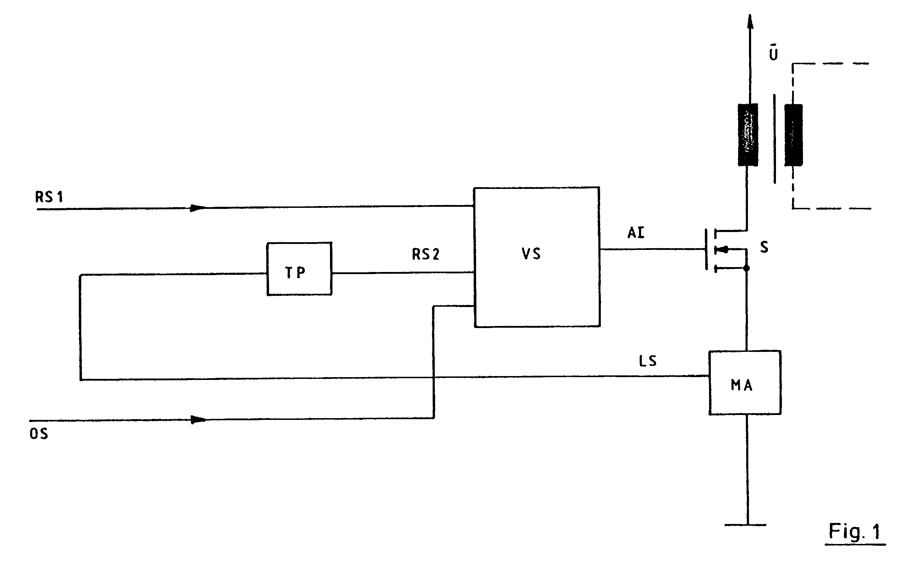

Fig. 1 zeigt ein erstes Ausführungsbeispiel eines erfindungsgemäßen Pulsweitenmodulators zur Ansteuerung eines Halbleiter-Leistungsschalters S in einem primärgetakten Schaltnetzteil, wobei von den übrigen Komponenten des Schaltnetzteils lediglich ein Übertrager Ü dargestellt ist, zu dessen primärseitiger Spule der Halbleiter-Leistungsschalter S in Reihe geschaltet ist. Dargestellt ist weiterhin eine Vergleicherschaltung VS, die Ansteuerimpulse AI im Takt eines Oszillatorssignals OS erzeugt, wobei die Dauer der Ansteuerimpulse AI von einem ersten und zweiten Regelsignal RS1, RS2 abhängt. Eine Meßanordnung MA erzeugt ein von dem durch den Halbleiter-Leistungsschalter S fließenden Laststrom abhängiges Laststromsignal LS, welches durch eine Tiefpaßanordnung TP in einem Rückkopplungszweig zu der Vergleicherschaltung VS rückgekoppelt ist, wobei am Ausgang der Tiefpaßanordnung TP das zweite Regelsignal RS2 anliegt. Die Vergleicherschaltung VS ist so gewählt, das sie die Ansteuerimopuls AI im Takt des Oszillatorsignals OS erzeugt, so daß der Halbleiter-Leistungsschalter periodisch mit dem Oszillatorsignal OS geöffnet wird, wobei die Öffnungsdauer von der Dauer der Ansteuerimpulse AI abhängt.

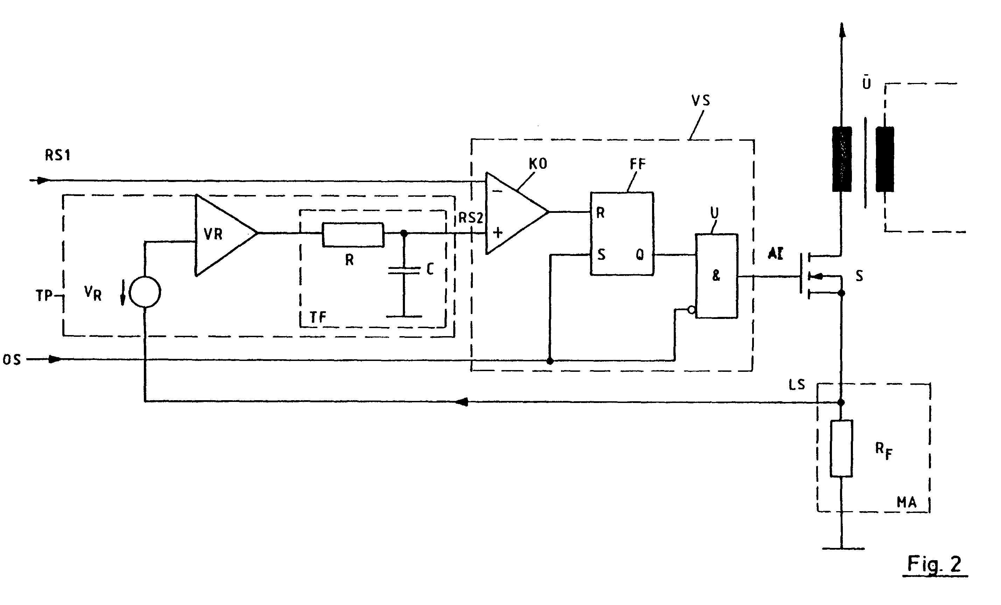

Fig. 2 zeigt ein weiteres Ausführungsbeispiel eines erfindungsgemäßen Pulsweitenmodulators. Die Meßanordnung MA ist in dem dargestellten Ausführungsbeispiel als Widerstand R_{F} ausgebildet, der mit einer ersten Klemme an Bezugspotential liegt und an dessen zweiter Klemme das Laststromsignal LS abgreifbar ist. Die dargestellte Vergleicherschaltung besteht aus einem Komparator KO, einem RS-Flip-Flop FF und einem UND-Glied U, wobei das erste und zweite Regelsignal RS1, RS2 an Eingängen des Komparators KO anliegen, dessen Ausgang am Reset-Eingang des RS-Flip-Flop FF anliegt. Am Set-Eingang des RS-Flip-Flops befindet sich das Oszillatorsignal OS, welches weiterhin an einem invertierenden Eingang des UND-Glieds U anliegt. Der Ausgang des RS-Flip-Flops FF ist mit einem weiteren Eingang des UND-Glieds U verbunden. Die Ansteuerimpulse AI liegen am Ausgang des UND-Glieds an.

Die in Fig. 2 dargestellte Tiefpaßanordnung TP besteht aus einem durch ein RC-Glied gebildetes Tiefpaßfilter TF, einem dem Tiefpaßfilter TF vorgeschalteten Verstärker VR sowie einer Rechtecksignalquelle V_{R}, die ein Rechtecksignal zu dem am Eingang der Tiefpaßanordnung TP anliegenden Laststromsignals LS addiert.

Die dargestellte Vergleicherschaltung VS ist so gewählt, daß sie Ansteuerimpulse AI erzeugt, welche jeweils mit einer negativen Taktflanke des Oszillatorsignals OS beginnen. Die Ansteuerimpulse AI enden jeweils, wenn das zweite Regelsignal RS2 das erste Regelsignal RS1 übersteigt. Die Rechtecksignalquelle V_{R} ist so gewählt, daß sie Rechtecksignale erzeugt, welche addiert zu dem Laststromsignal LS bei anschließender Tiefpaßfilterung ein zweites Regelsignal RS2 ergeben, welches streng monoton ansteigt, solange der Halbleiter-Leistungsschalter S geschlossen ist bzw. solange ein Ansteuerimpuls AI am Ausgang der Vergleicherschaltung VS anliegt.

Die Zeitkonstante des RC-Glieds ist vorzugsweise so gewählt, daß sie größer als die Dauer des in dem Laststromsignal LS enthaltenen Einschaltimpulses aber kleiner als die maximal mögliche Dauer der Ansteuerimpulse AI ist. Bei geringen Lastströmen ergibt sich aufgrund des Rechtecksignals nur ein geringer Einfluß des Laststromsignals auf das zweite Regelsignal RS2, so daß der Pulsweitenmodulator bei geringen Lastströmen in einem von herkömmlichen Schaltnetzteilen bekannten Voltage-Mode-Betrieb arbeitet, der sich dadurch auszeichnet, daß die Dauer der Ansteuerimpulse AI unabhängig von dem tatsächlich fließenden Laststroms ist. Bei größeren Lastströmen und damit höheren durch das Schaltnetzteil abgegebenen Leistungen nimmt die Abhängigkeit des zweiten Regelsignals RS2 von dem Laststrom zu.

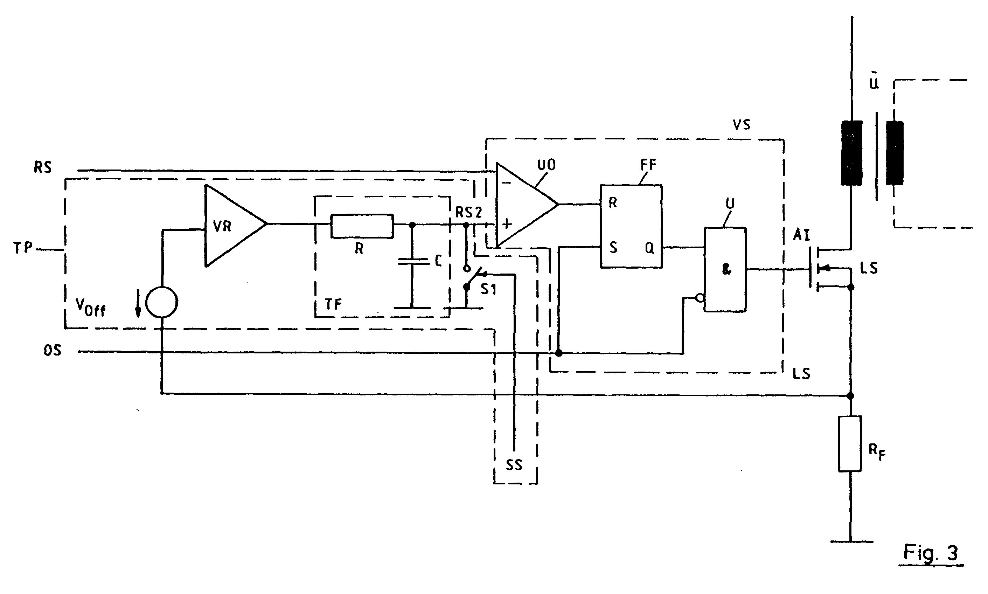

Fig. 3 zeigt den in Fig. 2 dargestellten Pulsweitenmodulator, wobei in der Tiefpaßanordnung TP die Rechtecksignalquelle durch eine Konstantspannungsquelle V_{OFF} ersetzt ist und die Tiefpaßanordnung weiterhin einen ersten Schalter S1 aufweist, der parallel zu dem Kondensator C des Tiefpaßfilters TF geschaltet ist. Das Öffnen und Schließen des ersten Schalter S1 erfolgt abhängig von einem Sprungsignal SS. Sowohl die in Fig. 2 dargestellte Rechtecksignalquelle V_{R} als auch die in Fig. 3 dargestellte Konstantspannungsquelle V_{OFF} in Verbindung mit dem ersten Schalter S1 bilden eine Schaltanordnung, welche einen von dem Laststromsignal LS unabhängigen Signalanteil des zweiten Regelsignals RS2 bewirken. Bei dem in Fig. 3 dargestellten Beispiel addiert sich die Spannung der Konstantspannungsquelle V_{OFF} zu dem Laststromsignal, wobei das Summensignal, nach Verstärkung durch den Verstärker VR und Tiefpaßfilterung durch das Tiefpaßfilter TF das zweite Regelsignal RS2 ergibt. Der erste Schalter S1, der mit Beginn eines Ansteuerimpulses AI bzw. mit dem Schließen des Halbleiter-Leistungsschalters S geöffnet wird, schließt sich nach dem Ende eines jeweiligen Ansteuerimpulses AI bzw. nach dem Öffnen des Halbleiter-Leistungsschalters S und sorgt so dafür, daß der Kondensator C vor Beginn eines neuen Ansteuerimpulses AI entladen wird und das Tiefpaßfilter TF damit in einen definierten Ausgangszustand übergeht.

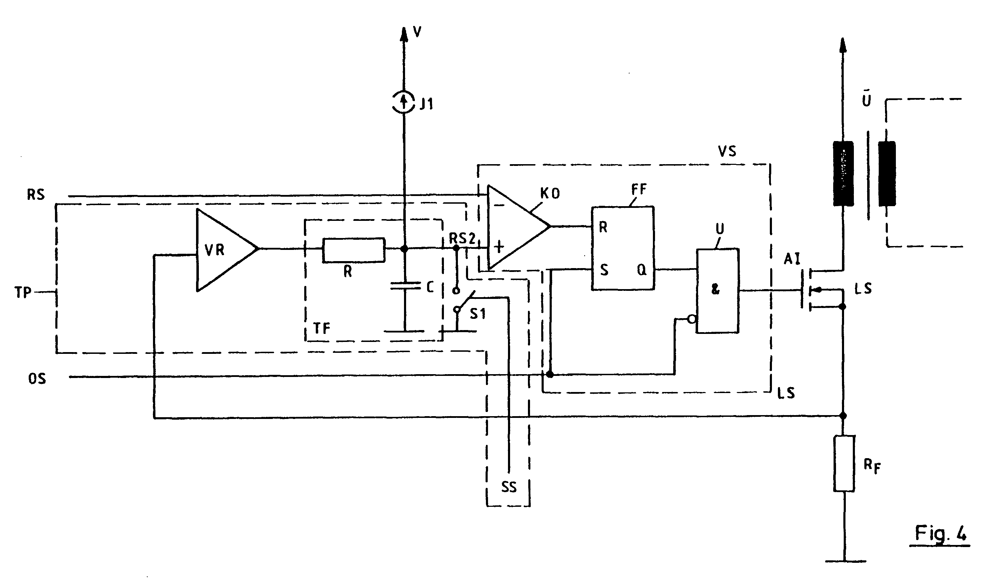

Der in Fig. 4 dargestellte Pulsweitenmodulator unterscheidet sich gegenüber dem in Fig. 3 dargestellten, durch eine erste Stromquelle J1, die an die gemeinsame Klemme von Widerstand R, Kondensator C und erstem Schalter S1 angeschlossen ist und welche die in Fig. 3 dargestellte Konstantspannungsquelle V_{OFF} ersetzt. Die zweite Klemme der ersten Stromquelle J1 ist in dem dargestellten Beispiel mit einer Klemme V für Versorgungsspannung verbunden. Der durch die erste Stromquelle J1 an dem Widerstand R erzeugte Spannungsabfall bewirkt einen vom Laststromsignal LS unabhängigen Signalanteil an dem zweiten Regelsignal RS2. Der erste Schalter S1, der mit Beginn eines Ansteuerimpulses AI bzw. mit dem Schließen des Halbleiter-Leistungsschalters S durch das Sprungsignal SS geöffnet wird, schließt sich nach dem Ende eines jeweiligen Ansteuerimpulses AI bzw. nach dem Öffnen des Halbleiter-Leistungsschalters und sorgt so dafür, daß der Kondensator vor Beginn eines neuen Ansteuerimpulses AI entladen wird und das Tiefpaßfilter TF damit in einen definierten Ausgangszustand übergeht.

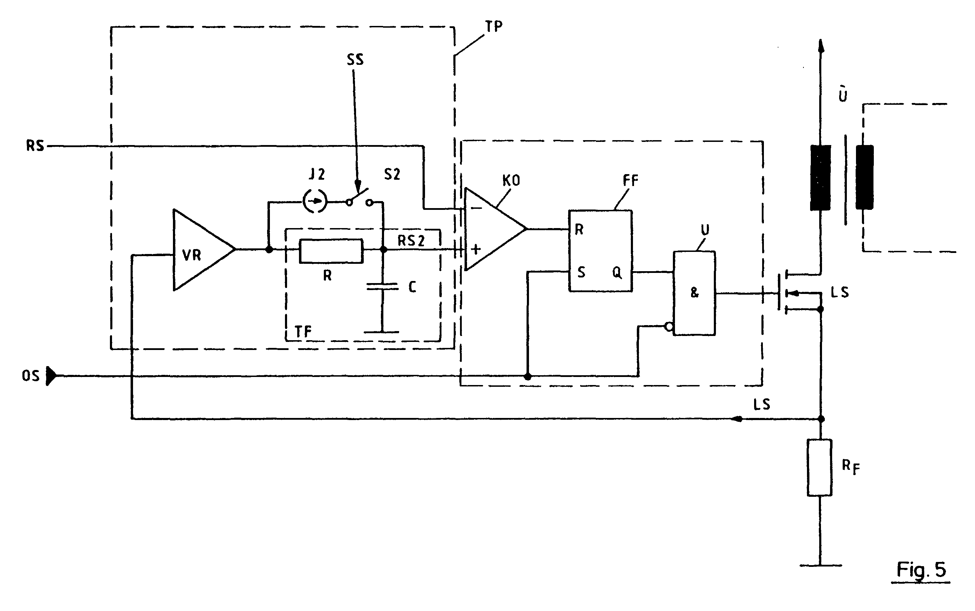

Fig. 5 zeigt einen Pulsweitenmodulator, der eine gegenüber den in den Figuren 2 bis 4 dargestellten Pulsweitenmodulatoren geänderte Tiefpaßanordnung TP aufweist. Dargestellt ist eine weitere Schaltanordnung zur Erzeugung eines vom Laststromsignal LS unabhängigen Signalanteils in dem zweiten Regelsignal RS2. Die Schaltanordnung besteht aus einer zweiten Konstantstromquelle J2 und einem dazu in Reihe geschalteten zweiten Schalter S2. Eine Klemme der Reihenschaltung ist mit der gemeinsamen Klemme von Widerstand R und Kondensator C verbunden, während die andere Klemme der Reihenschaltung in dem dargestellten Beispiel mit der anderen Klemme des Widerstands R verbunden ist. Diese andere Klemme der Reihenschaltung kann ebenso mit einer Klemme für ein beliebiges Potential verbunden sein kann, um die Funktionsfähigkeit der Schaltung zu gewährleisten. Das Öffnen und Schließen des zweiten Schalters S2 erfolgt abhängig von dem bereits erwähnten Sprungsignal SS. Die zweite Stromquelle J2 bewirkt gesteuert durch den zweiten Schalter S2 in Verbindung mit dem Sprungsignal SS an dem Widerstand R einen Spannungsabfall im Takt des Sprungssignals SS, wobei sich dieser rechteckförmige Spannungsabfall zu dem Laststromsignal LS vor der Tiefpaßfilterung addiert.

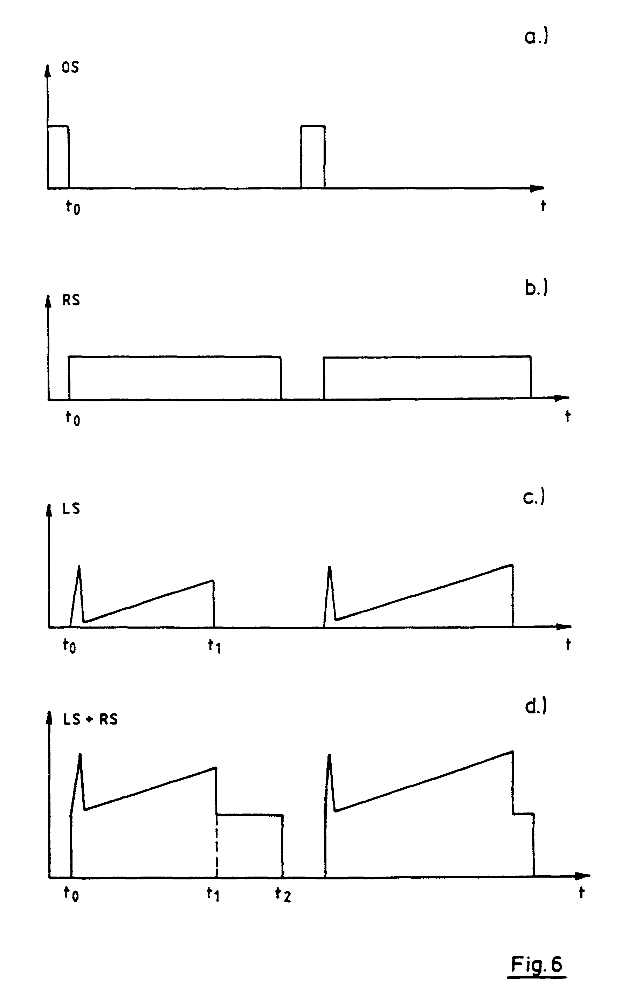

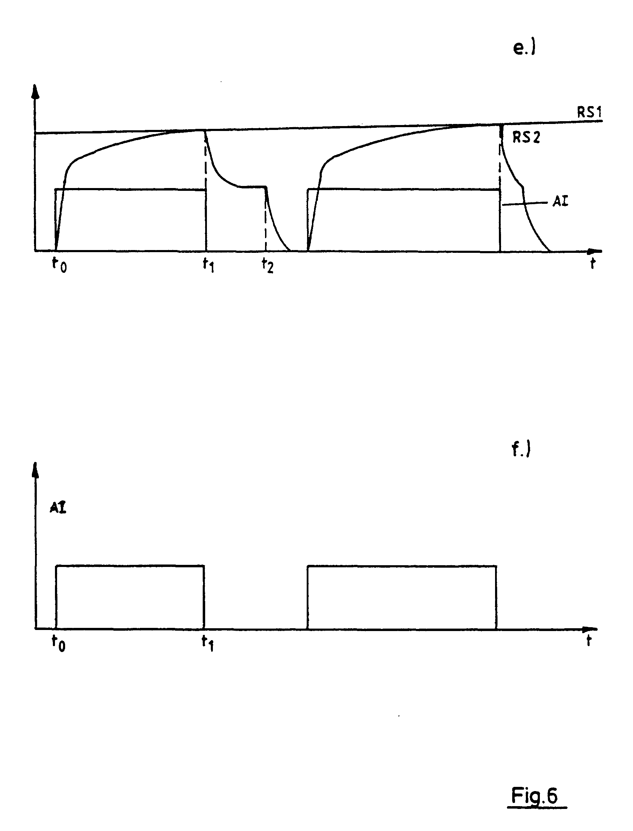

Fig. 6 zeigt die Funktionsweise eines erfindungsgemäßen Pulsweitenmodulators anhand ausgewählter Signale des in Fig. 2 dargestellten Pulsweitenmodulators. Die Fig. 5a) bis 5f) zeigen in der angegebenen Reihenfolge die zeitlichen Verläufe des Oszillatorsignals OS, des Rechtecksignals RS der Rechtecksignalquelle V_{R}, des Laststromsignals LS, des aus Laststromsignal LS und dem Rechtecksignal RS gebildeten Summensignals und des ersten und zweiten Regelsignals RS1, RS2 sowie der Ansteuerimpulse AI.

Aus den Figuren wird deutlich, daß die Austeuerimpulse AI jeweils mit fallender Taktflanke des Oszillatorsignals OS beginnen. Das Laststromsignal LS weist zu Beginn einen Einschaltimpuls auf und geht dann in ein linear ansteigendes Signal über. Die Rechtecksignale RS der Rechtecksignalquelle V_{R} sind so gewählt, daß sie jeweils mit fallender Taktflanke des Oszillatorsignals OS beginnen und erst nach Ende der Ansteuerimpulse AI enden. Die Ansteuerimpulse AI, deren Dauer von dem ersten und zweiten Regelsignal abhängt, enden, wenn das zweite Regelsignal RS2 das erste Regelsignal RS1 übersteigt. Zum Vergleich der Signale sind in Fig. 6 beispielhaft zwei Zeitpunkte t₀ und t₁ angegeben, wobei zum Zeitpunkt t₀ einer der Ansteuerimpulse AI beginnt, welcher zum Zeitpunkt t₁ endet.

## Patentansprüche

1. Pulsweitenmodulator zur Ansteuerung eines Halbleiter-Leistungsschalters (S) in einem Schaltnetzteil mit folgenden Merkmalen:
- einer Vergleicherschaltung (VS) zur Erzeugung von Ansteuerimpulsen (AI) nach Maßgabe eines Oszillatorsignals (OS), wobei die Dauer der einzelnen Ansteuerimpulse (AI) von einem ersten Regelsignal (RS1) und einem zweiten Regelsignal (RS2) abhängt;
- einer Meßanordnung (MA) zur Erzeugung eines vom Laststrom des Leistungsschalters (S) abhängigen Laststromsignals (LS);
- einem Rückkopplungszweig zur Rückkopplung des Laststromsignals (LS) an die Vergleicherschaltung (VS);
- der Rückkopplungzweig weist eine Tiefpaßanordnung (TP) auf, deren Eingang das Laststromsignal (LS) zuführbar und an deren Ausgang das zweite Regelsignal (RS2) abgreifbar ist,
**gekennzeichnet durch** das weitere Merkmal:
- die Tiefpaßanordnung (TP) weist ein Tiefpaßfilter (TF) und eine Schaltanordnung (V_{R}; S1, V_{OFF}; J1; S2, J2) auf, welche einen von dem Laststromsignal (LS) unabhängigen Signalanteil des zweiten Regelsignals (RS2) bewirkt.

2. Pulsweitenmodulator nach Anspruch 1, **dadurch gekennzeichnet, daß** das Tiefpaßfilter (TF) ein Filter ersten Grades ist.

3. Pulsweitenmodulator nach einem der Ansprüche 1 oder 2, **dadurch gekennzeichnet, daß** die Tiefpaßanordnung (TP) einen Verstärker (VR) aufweist.

4. Pulsweitenmodulator nach einem der vorhergehenden Ansprüche, **dadurch gekennzeichnet, daß** die Schaltanordnung (V_{R}; S1, V_{OFF}; J1; S2, J2) aus einer Rechtecksignalquelle (V_{R}) besteht, die vor dem Tiefpaßfilter (TF) angeordnet ist.

5. Pulsweitenmodulator nach einem der vorhergehenden Ansprüche, **dadurch gekennzeichnet, daß** die Meßanordnung (MA) aus einem vom Laststrom durchflossenen Stromfühlwiderstand (R_{F}) besteht, der mit einer ersten Klemme an Bezugspotential liegt und an dessen zweiter Klemme das Laststromsignal (LS) abgreifbar ist.

6. Pulsweitenmodulator nach einem der vorhergehenden Ansprüche, **dadurch gekennzeichnet, daß** das Tiefpaßfilter (TF) aus einem Widerstand (R) und einem Kondensator (C) besteht, welcher mit einer ersten Klemme an Bezugspotential liegt und an dessen zweiter Klemme das zweite Regelsignal (RS2) abgreifbar ist.

7. Pulsweitenmodulator nach Anspruch 6, **dadurch gekennzeichnet, daß** die Schaltanordnung (V_{R}; S1, V_{OFF}; J1; S2, J2) aus einer Konstantspannungsquelle (V_{OFF}) und einem ersten Schalter (S1) besteht, der parallel zu dem Kondensator (C) angeordnet ist und der abhängig von einem in der Schaltanordnung (V_{R}; S1 V_{OFF}; S1, J1; S2, J2) bereitgestellten Sprungsignal (SS) geöffnet oder geschlossen ist.

8. Pulsweitenmodulator nach Anspruch 6, **dadurch gekennzeichnet, daß** die Schaltanordnung (V_{R}; S1, V_{OFF}; J1; S2, J2) aus einer ersten Stromquelle (J1) und dem ersten Schalter (S1) besteht, der parallel zu dem Kondensator (C) angeordnet ist und der abhängig von einem in der Schaltanordnung (V_{R}; S1, V_{OFF}; J1; S2, J2) bereitgestellten Sprungsignal (SS) geöffnet oder geschlossen ist und wobei eine Klemme der ersten Stromquelle (J1) mit einer gemeinsamen Klemme des Widerstands (R) und des Kondensators (C) verbunden ist.

9. Pulsweitenmodulator nach Anspruch 6, **dadurch gekennzeichnet, daß** die Schaltanordnung (V_{R}; S1, V_{OFF}; J1; S2, J2) aus einer zweiten Stromquelle (J2) und einem in Reihe dazu geschalteten zweiten Schalter (S2) besteht, wobei die Reihenschaltung mit einer Klemme an der gemeinsamen Klemme von Widerstand (R) und Kondensator (C) angeschlossen ist und der zweite Schalter (S2) abhängig von dem Sprungsignal (SS) geöffnet oder geschlossen ist.

10. Pulsweitenmodulator nach einem der vorhergehenden Ansprüche, **dadurch gekennzeichnet, daß** die Vergleicherschaltung (VS) einen Komparator (KO), ein RS-Flip-Flop (FF) und ein UND-Glied (U) aufweist, wobei der Komparator (KO) eingangsseitig mit dem ersten und zweiten Regelsignal (RS1, RS2), das RS-Flip-Flop (FF) eingangsseitig mit dem Ausgang des Komparators (KO) und dem Oszillatorsignal (OS) und das UND-Glied (U) eingangsseitig mit einem Ausgangssignal des RS-Flip-Flop (FF) und dem Oszillatorsignal (OS) verbunden ist.

## Claims

1. Pulse width modulator for driving a semiconductor power switch (S) in a switched-mode power supply having the following features:
- a comparator circuit (VS) for producing drive pulses (AI) in accordance with an oscillator signal (OS), where the duration of the individual drive pulses (AI) is dependent on a first control signal (RS1) and a second control signal (RS2);
- a measuring arrangement (MA) for producing a load current signal (LS) which is dependent on the load current of the power switch (S);
- a feedback path for feeding back the load current signal (LS) to the comparator circuit (VS);
- the feedback path has a low-pass filter arrangement (TP), to whose input the load current signal (LS) can be supplied, and at whose output the second control signal (RS2) can be tapped off,
**characterized by** the further feature:
- the low-pass filter arrangement (TP) has a low-pass filter (TF) and a switching arrangement (V_{R}; S1, V_{OFF}; J1 ; S2, J2) which produces a signal component of the second control signal (RS2) which is independent of the load current signal (LS).

2. Pulse width modulator according to Claim 1, **characterized in that** the low-pass filter (TF) is a first-degree filter.

3. Pulse width modulator according to one of Claims 1 or 2, **characterized in that** the low-pass filter arrangement (TP) has an amplifier (VR).

4. Pulse width modulator according to one of the preceding claims, **characterized in that** the switching arrangement (V_{R}; S1, V_{OFF}; J1; S2, J2) comprises a square-wave signal source (V_{R}) which is arranged upstream of the low-pass filter (TF).

5. Pulse width modulator according to one of the preceding claims, **characterized in that** the measuring arrangement (MA) comprises a current sensing resistor (R_{F}) through which the load current flows and a first terminal of which is connected to reference-earth potential, and at whose second terminal the load current signal (LS) can be tapped off.

6. Pulse width modulator according to one of the preceding claims, **characterized in that** the low pass filter (TF) comprises a resistor (R) and a capacitor (C), a first terminal of which is connected to reference-earth potential, and at whose second terminal the second control signal (RS2) can be tapped off.

7. Pulse width modulator according to Claim 6, **characterized in that** the switching arrangement (V_{R}; S1, V_{OFF}; J1; S2, J2) comprises a constant voltage source (V_{OFF}) and a first switch (S1), which is arranged in parallel with the capacitor (C) and is off or on depending on a step signal (SS) which is made available in the switching arrangement (V_{R}; S1, V_{OFF}; J1 ; S2, J2).

8. Pulse width modulator according to Claim 6, **characterized in that** the switching arrangement (V_{R}; S1, V_{OFF}; J1; S2, J2) comprises a first current source (J1) and the first switch (S1), which is arranged in parallel with the capacitor (C) and is off or on depending on a step signal (SS) which is made available in the switching arrangement (V_{R}; S1, V_{OFF}; J1; S2, J2), and where one terminal of the first current source (J1) is connected to a common terminal of the resistor (R) and of the capacitor (C).

9. Pulse width modulator according to Claim 6, **characterized in that** the switching arrangement (V_{R}; S1, V_{OFF}; J1, S2, J2) comprises a second current source (J2) and a second switch (S2), which is connected in series therewith, where one terminal of the series circuit is connected to the common terminal of resistor (R) and capacitor (C), and the second switch (S2) is off or on depending on the step signal (SS).

10. Pulse width modulator according to one of the preceding claims, **characterized in that** the comparator circuit (VS) has a comparator (KO), an RS flip-flop (FF) and an AND gate (U), where the input side of the comparator (KO) is connected to the first and second control signals (RS1, RS2), the input side of the RS flip-flop (FF) is connected to the output of the comparator (KO) and to the oscillator signal (OS), and the input side of the AND gate (U) is connected to an output signal from the RS flip-flop (FF) and to the oscillator signal (OS).

## Revendications

1. Modulateur de largeur d'impulsion pour commander un disjoncteur (S) à semiconducteur dans une alimentation à découpage, comportant les caractéristiques suivantes :
- un circuit (VS) comparateur pour produire des impulsions (AI) de commande suivant la donnée d'un signal (OS) d'oscillateur, la durée des impulsions (AI) de commande individuelles dépendant d'un premier signal (RS1) de régulation et d'un deuxième signal (RS2) de régulation ;
- un dispositif (MA) de mesure pour produire un signal (LS) de courant de charge dépendant du courant de charge du disjoncteur (S) ;
- une branche de rétrocouplage pour le rétrocouplage du signal (LS) de courant de charge du circuit (VS) comparateur ;
- la branche de rétrocouplage comporte un dispositif (TP) passe-bas à l'entrée duquel le signal (LS) de courant de charge peut être envoyé et à la sortie duquel le deuxième signal (RS2) de régulation peut être prélevé,
**caractérisé par** la caractéristique supplémentaire :
- le dispositif (TP) passe-bas comporte un filtre (TF) passe-bas et un dispositif (V_{R} ; S1, V_{OFF} ; J1 ; S2, J2) de commutation, qui donne une composante du deuxième signal (RS2) de régulation indépendante du signal (LS) de courant de charge.

2. Modulateur de largeur d'impulsion suivant la revendication 1, **caractérisé en ce que** le filtre (TF) passe-bas est un filtre de premier degré.

3. Modulateur de largeur d'impulsion suivant l'une des revendications 1 ou 2, **caractérisé en ce que** le dispositif (TP) passe-bas comporte un amplificateur (VR).

4. Modulateur de largeur d'impulsion suivant l'une des revendications précédentes, **caractérisé en ce que** le dispositif (VR; S1, V_{OFF}; J1 ; S2, J2) de commutation est constitué d'une source (V_{R}) rectangulaire et monté en amont du filtre (TF) passe-bas.

5. Modulateur de largeur d'impulsion suivant l'une des revendications précédentes, **caractérisé en ce que** le dispositif (MA) de mesure est constitué d'une résistance (R_{F}) de détection du courant, dans laquelle passe le courant de charge, qui se trouve au potentiel de référence à une première borne et à la deuxième borne de laquelle le signal (LS) de courant de charge peut être prélevé.

6. Modulateur de largeur d'impulsion suivant l'une des revendications précédentes, **caractérisé en ce que** le filtre (TF) passe-bas est constitué d'une résistance (R) et d'un condensateur (C) qui est au potentiel de référence à une première borne et à la deuxième borne duquel le deuxième signal (RS2) de régulation peut être prélevé.

7. Modulateur de largeur d'impulsion suivant la revendication 6, **caractérisé en ce que** le dispositif (V_{R}; S1, V_{OFF} ; J1 ; S2, J2) de commutation est constitué d'une source (V_{OFF}) de tension constante et d'un premier interrupteur (S1) qui est monté en parallèle avec le condensateur (C) et qui est ouvert ou fermé en fonction d'un signal (SS) de saut mis à disposition dans le dispositif (V_{R} ; S1, V_{OFF} ; S1, J1 ; S2, J2) de commutation.

8. Modulateur de largeur d'impulsion suivant la revendication 6, **caractérisé en ce que** le dispositif (V_{R} ; S1, V_{OFF} ; J1 ; S2, J2) de commutation est constitué d'une première source (J1) de courant et du premier interrupteur (S1) qui est monté en parallèle avec le condensateur (C) et qui est ouvert ou fermé en fonction d'un signal de saut mis à disposition dans le dispositif (V_{R}, S1, V_{OFF} ; J1, S2) de commutation, et une borne de la première source (J1) de courant étant reliée à une borne commune de la résistance (R) et du condensateur (C).

9. Modulateur de largeur d'impulsion suivant la revendication 6, **caractérisé en ce que** le dispositif (V_{R} ; S1, V_{OFF}; J1 ; S2, J2) de commutation est constitué d'une deuxième source (J2) de courant et d'un deuxième interrupteur (S2) en série avec cette source, le circuit série étant raccordé par une borne à la borne commune de la résistance (R) et du condensateur (C) et le deuxième interrupteur (S2) étant ouvert ou fermé en fonction du signal (SS) de saut.

10. Modulateur de largeur d'impulsion suivant la revendication 6, **caractérisé en ce que** le circuit (VS) comparateur comporte un comparateur (KO), une bascule (FF) RS et un élément (U) ET, le comparateur (KO) étant relié du côté entrée au premier signal (RS1) de régulation et au deuxième signal (RS2) de régulation, la bascule (FF) RS étant reliée côté entrée à la sortie du comparateur (KO) et au signal (OS) oscillateur et l'élément (U) ET étant relié côté entrée à un signal de sortie de la bascule (FF) RS et au signal (OS) d'oscillateur.
